# EUROPÄISCHE PATENTSCHRIFT

(11) **EP 1 382 098 B1**
(45) Veröffentlichungstag und Bekanntmachung des Hinweises auf die Patenterteilung: **29.05.2013**
(21) Anmeldenummer: 02737762.1
(22) Anmeldetag: 26.03.2002
(51) Int. Cl.: H02B 11/127

(54) **ELEKTRISCHER SCHALTER MIT EINER ANTRIEBSWELLE UND MIT EINEM SPERRMECHANISMUS ZUM SPERREN DES BETÄTIGENS DER ANTRIEBSWELLE**
ELECTRIC SWITCH WITH A DRIVE SHAFT AND A BLOCKING MECHANISM FOR BLOCKING ACTUATION OF THE DRIVE SHAFT
COMMUTATEUR ELECTRIQUE COMPRENANT UN ARBRE D'ENTRAINEMENT ET UN MECANISME DE VERROUILLAGE POUR BLOQUER L'ACTIONNEMENT DE L'ARBRE

(30) Priorität: 23.04.2001 DE 10120784; 21.02.2002 DE 20202929 U
(43) Veröffentlichungstag der Anmeldung: 21.01.2004
(73) Patentinhaber: Siemens Aktiengesellschaft, 80333 München (DE)
(72) Erfinder: DEYLITZ, Erhard, 13125 Berlin (DE); LOSCH, Stefan, 13595 Berlin (DE)
(86) Internationale Anmeldenummer: PCT/DE2002/001158
(87) Internationale Veröffentlichungsnummer: WO 2002/087040

(56) Entgegenhaltungen:
- US-A- 4 139 748

## Beschreibung

Die Erfindung bezieht sich auf einen elektrischen Schalter mit einer Antriebswelle, die mittels einer Handkurbel betätigbar ist, und mit einem Sperrmechanismus zum Sperren des Betätigens der Antriebswelle, bei dem die Handkurbel einen entlang der Antriebswelle verschiebbaren, gegen Abnahme von der Antriebswelle gesicherten Schaft und einen am Schaft axial fixierten, vom Schaft abgewinkelten Kurbelarm aufweist.

Ein derartiger elektrischer Schalter ist beispielsweise aus der US-Patentschrift 4, 139, 748 bekannt. - Bei diesem bekannten Schalter ist die Antriebswelle Teil eines Verfahrmechanismus des elektrischen Schalters zum Verfahren des Schalters relativ zu einem Einschubrahmen. Hierbei weist die Antriebswelle einen mit drei Schlitzen versehenen Flansch auf. In Abhängigkeit davon, ob sich der Schalter in Trennstellung (Haupttrenn- und Hilfstrennkontakte des Schalters sind geöffnet), Teststellung (Haupttrennkontakte sind geöffnet, Hilfstrennkontakte sind geschlossen) oder Betriebsstellung (Haupttrenn- und Hilfstrennkontakte sind geschlossen) im Einschubrahmen befindet, greift eine Sperrklinke unter der Kraft einer Vorspannfeder in einen der drei Schlitze ein und verhindert damit ein Verdrehen der Antriebswelle mittels der Handkurbel. Die Sperrklinke und der Flansch müssen hierbei eine Sperrwirkung erzeugen, die dem von der Handkurbel auf die Antriebswelle übertragenen hohen Drehmoment entspricht, und unterliegen daher hohen Anforderungen bezüglich ihrer Dimensionierung und Festigkeit. Um den Schalter zu verfahren, d. h. um die Antriebswelle zu betätigen, muss die Sperrklinke mittels eines Betätigers, der über eine Langloch-Stift-Verbindung an die Sperrklinke gekoppelt ist, entgegen der Kraft der Vorspannfeder außer Eingriff mit dem jeweiligen Schlitz gebracht werden. Der Betätiger durchgreift hierbei eine Öffnung an der Frontseite des Schalters.

Der Erfindung liegt hiervon ausgehend die Aufgabe zugrunde, den Sperrmechanismus der eingangs genannten Art so zu gestalten, dass zum Sperren des Betätigens der Antriebswelle eine im Vergleich zum Drehmoment der Antriebswelle wesentlich geringere Sperrwirkung erforderlich ist.

Gemäß der Erfindung wird diese Aufgabe dadurch gelöst, dass an der Frontseite des Schalters eine Ausnehmung vorgesehen ist, in die der Kurbelarm der Handkurbel durch Verschieben des Schaftes verdrehsicher versenkbar ist, wobei bei in der Ausnehmung versenktem Kurbelarm der zum Sperren aktivierte Sperrmechanismus den Schaft der Handkurbel axial fixiert.

Durch diese Anordnung wird ein Herausziehen der Handkurbel aus der Ausnehmung und damit das Betätigen der Antriebswelle mittels der Handkurbel verhindert. Die dabei vom Sperrmechanismus aufzubringende Gegenkraft ist sehr gering, da sie in ihrem Wert der Kraft entspricht, die manuell vom Bedienpersonal aufgebracht wird, das versucht, den Schaft aus der Ausnehmung zu ziehen. Sie ist insbesondere wesentlich geringer als die Kraftwirkung des Drehmoments, das bei herausgezogener Handkurbel auf die Antriebswelle übertragbar ist. Diese geringe aufzubringende Gegenkraft stellt keine hohen Anforderungen an die Dimensionierung oder Festigkeit des Sperrmechanismus und ermöglicht es, auch kostengünstigere Materialien zu seiner Fertigung zu verwenden.

In Weiterbildung der Erfindung ist vorgesehen, dass der Sperrmechanismus bei aus der Ausnehmung herausgezogenem Kurbelarm zum Sperren der Antriebswelle aktivierbar ist. - Diese Ausgestaltung des Sperrmechanismus erlaubt es schon beim Verfahren des Schalters beispielsweise aus seiner Feststellung in seine Trennstellung den Sperrmechanismus zu aktivieren, so dass dann beim Erreichen der vorgesehenen Stellung - beispielsweise der Trennstellung - der Kurbelarm in der Ausnehmung versenkbar, nach seinem Versenken jedoch nicht wieder aus der Ausnehmung herausziehbar ist. - Eine hierzu dienende konstruktiv sehr einfach ausgebildete Ausführungsform sieht vor, dass der Sperrmechanismus eine im Schaft der Handkurbel angeordnete, axial (d. h. in Richtung der Achse des Schaftes) begrenzte Nut, ein zum Eingriff in die Nut dienendes Sperrelement und ein auf das Sperrelement wirkendes Betätigungselement aufweist und dass der Sperrmechanismus bei in eine EIN-Stellung überführtem Betätigungselement aktiviert ist, wobei das Sperrelement über einen Federmechanismus mit dem Betätigungselement gekoppelt ist und bis zum Eingriff in die Nut bei axialer Bewegung des Schaftes auf dem Schaft gleitet.

In Weiterbildung dieser Ausführungsform ist vorgesehen, dass das Sperrelement eine Gleitfläche aufweist, mittels deren das Sperrelement beim Verschieben des Kurbelarmes in Richtung der Ausnehmung aus der Bewegungsbahn des Schaftes herausgedrückt wird. - Bei dieser Ausführungsform kann die Handkurbel unabhängig von der Lage des Sperrelementes im wesentlichen über die gesamte Länge ihres Schaftes aus der Ausnehmung herausgezogen werden. Dadurch steht dem Bedienpersonal ausreichend Freiraum zur Verfügung, um den Kurbelarm ungehindert zu drehen.

Bevorzugt kann zur alternativen Betätigung des Sperrelementes das eine Betätigungselement mit einem zusätzlichen Betätigungselement gekoppelt werden. - Damit ist gewährleistet, dass der Sperrmechanismus zumindest über zwei jeweils auf einen der beiden Betätigungselemente wirkende Vorrichtungen, die auch unabhängig voneinander wirken können, aktivierbar ist.

Ein gemäß der Erfindung ausgebildeter elektrischer Schalter in Form eines Niederspannungs-Leistungsschalters ist in den Figuren 1 bis 6 dargestellt. Dabei zeigen
Figur 1 eine Frontansicht einer Schaltstelle mit einem Einschubrahmen, in dem ein Niederspannungs-Leistungsschalter angeordnet ist, der eine Ausnehmung für eine Handkurbel eines Fahrantriebes aufweist,
Figur 2 den Fahrantrieb des Niederspannungs-Leistungsschalters gemäß Figur 1 als Baugruppe,
Figur 3 den Fahrantrieb gemäß Figur 2, jedoch ohne ein Gehäuse und ohne die Ausnehmung für die Handkurbel, wobei sich eine Fahrwelle des Fahrantriebes in der Trennstellung des zugehörigen Leistungsschalters befindet,
Figur 4 eine der Figur 3 entsprechende Darstellung wesentlicher Teile des Fahrantriebes, jedoch in der Betriebsstellung des zugehörigen Leistungsschalters und
Figuren 5 und 6 zwei weitere Darstellungen des Fahrantriebes mit einem Sperrmechanismus und mit einer Vorrichtung zur Steuerung des Sperrmechanismus.

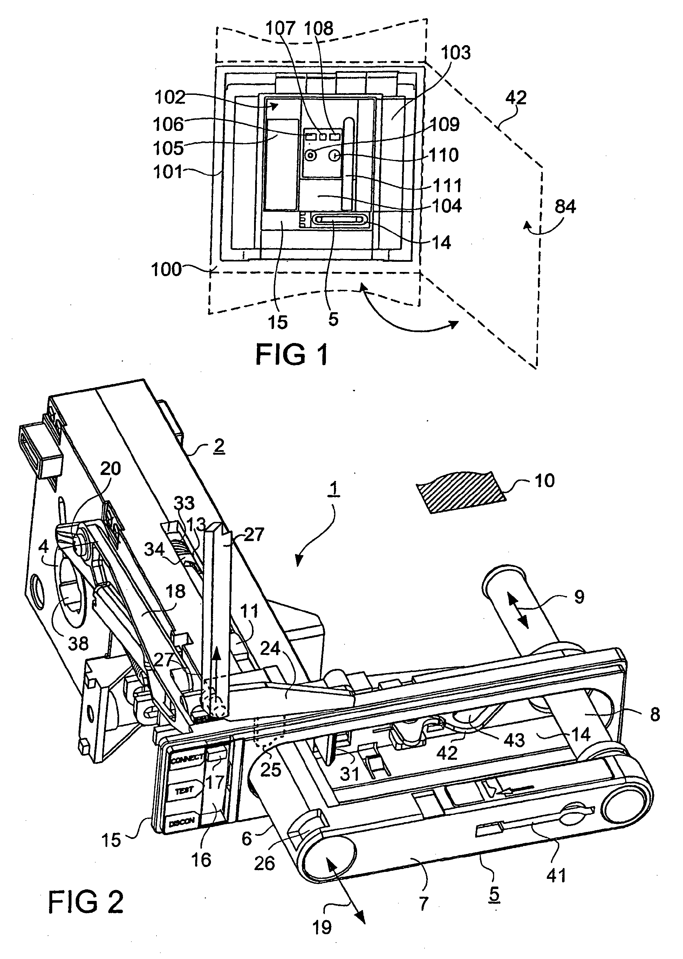

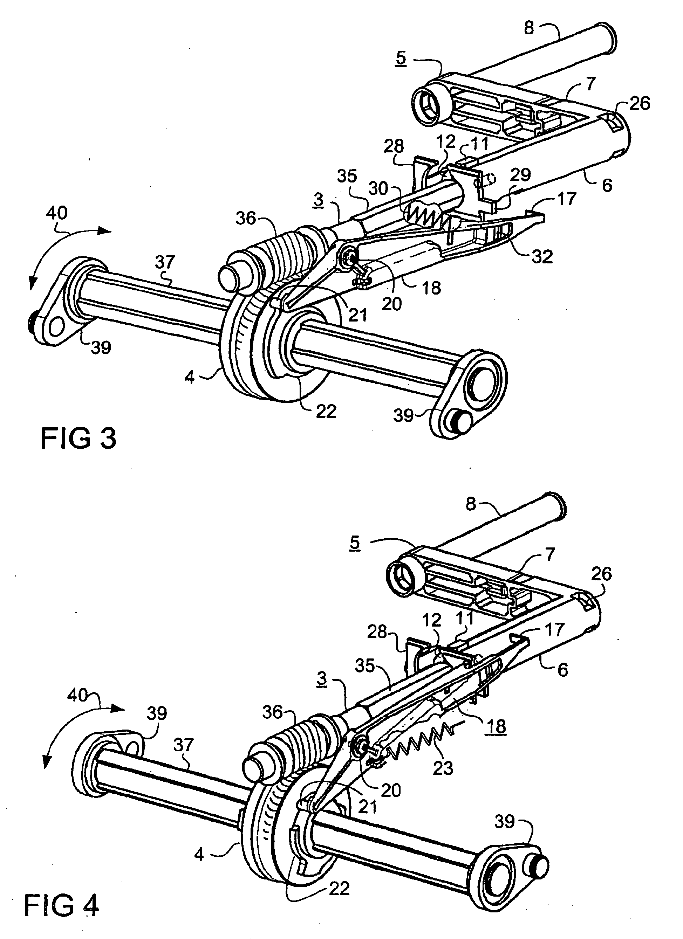

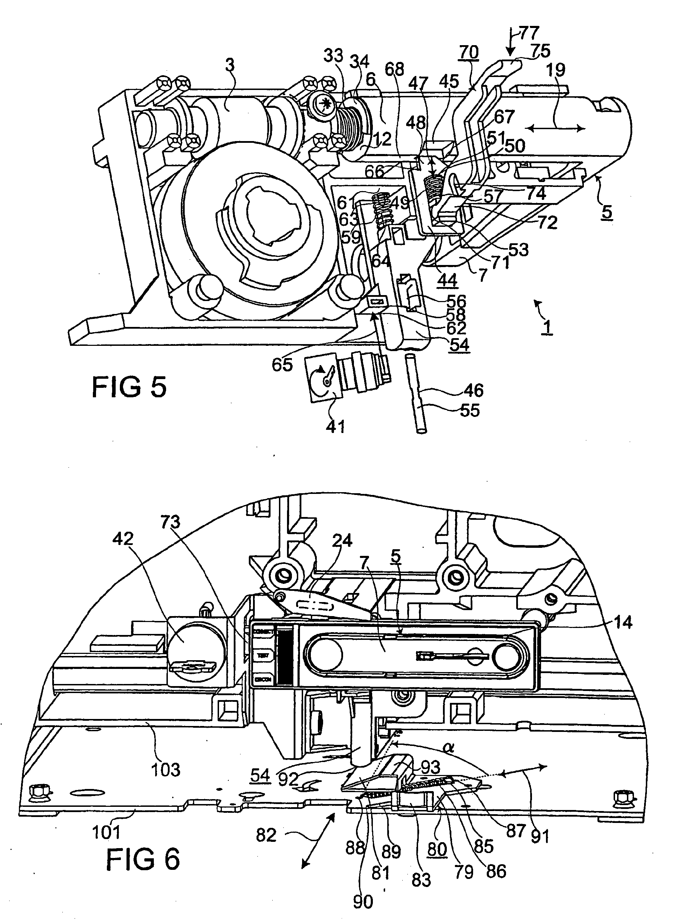

Gemäß der Figur 1 ist in einer Schaltzelle 100 eines Schaltschrankes oder einer Schaltanlage ein Einschubrahmen 101 angeordnet, wobei ein Niederspannungs-Leistungsschalter 102 in dem Einschubrahmen 101 in bekannter Weise verfahrbar angeordnet ist. Der in dem Einschubrahmen 101 (vgl. auch Figur 6) eingefahrene Niederspannungs-Leistungsschalter 102 weist ein Gehäuse 103 (vgl. auch Figur 6) zur Aufnahme einer Schaltpolbaugruppe und ein an der Vorderseite des Gehäuses 103 befestigtes die Frontseite des Schalters bildendes Bedienpult 104 auf, mittels dessen ein Schalt-Antrieb und weitere Teile des Schalters abgedeckt werden. Am Bedienpult 104 sind ein Überstromauslöser 105, Bedien- und Anzeigeelemente 106 bis 110, ein Handaufzugshebel 111 zum Spannen eines Federspeicher des Schalt-Antriebes sowie eine in eine Ausnehmung 14 versenkbare Handkurbel 5 zum Betätigen einer Antriebswelle 3 (vgl. Figur 3 und 4) eines Fahrantriebes 1 (vgl. Figuren 2 bis 5) angeordnet.

Gemäß der Figur 2 weist der Fahrantrieb 1 ein Gehäuse 2 auf, das zweckmäßig aus zwei schalenartigen Hälften zusammengesetzt sein kann, zwischen denen Getriebeteile und weitere Komponenten angeordnet sind. Eine mittels der Handkurbel 5 ausgeübte Drehbewegung wird mittels der Antriebswelle 3 (vgl. die Figuren 3 bis 4) in eine Drehung einer Fahrwelle 37 (Figuren 3 und 4) umgesetzt. Hierzu ist auf der Antriebswelle 3 eine Schnecke 36 (vgl. Figuren 3 und 4) angeordnet, die mit einem Getrieberad 4 in Eingriff steht. Die Längsachsen der Antriebswelle 3 und der Fahrwelle 37 stehen rechtwinklig zueinander. Die Fahrwelle 37 ist nicht fest mit dem Fahrantrieb 1 verbunden, sondern ist in einer Profilöffnung 38 des Getrieberades 4 verschiebbar, die dem Profil der Fahrwelle 37 angepasst ist. Auf diese Weise ist der Fahrantrieb 1 für Leistungsschalter unterschiedlicher Größe verwendbar und ist nicht an eine bestimmte Position entlang der Fahrwelle 37 gebunden. An den Enden der Fahrwelle 37 sind in bekannter Weise Fahrkurbeln 39 (vgl. Figuren 3 und 4) angebracht, die etwa in der Weise mit ortsfesten Teilen zusammenwirken, wie dies beispielsweise schematisch in der DE 44 20 580 C1 oder der DE 44 20 581 C1 (jeweils Figur 1) gezeigt ist. Gleichfalls nicht dargestellt ist die Befestigung des Fahrantriebes 1 an einem Leistungsschalter, da dies dem Fachmann vertraut ist.

Zum Drehen der in dem Gehäuse 2 gelagerten Antriebswelle 3 dient, wie schon erwähnt, eine Handkurbel 5, die im Unterschied zu anderen bekannten Fahrantrieben (vgl. die genannten DE 44 20 580 C1 und DE 44 20 581 C1) von der Antriebswelle 3 nicht abnehmbar ist, sondern Bestandteil des Fahrantriebes 1 ist. Die Handkurbel 5 weist einen hohlen Schaft 6 auf, der einen Sechskantschaft 35 der Antriebswelle 3 (Figuren 3 und 4) umgreift und entlang der Richtung eines Feiles 19 auf der Antriebswelle 1 verschiebbar ist. Offensichtlich können die Antriebswelle 3 und der Schaft 6 auch andere Profile aufweisen, um eine drehschlüssige Kopplung herzustellen, die eine Längsverschiebung ermöglicht.

Der Schaft 6 trägt einen Führungszapfen 11, der in eine am Gehäuse 2 vorgesehene Führungsnut 13 eingreift. Da die Führungsnut 13 dem Führungszapfen 11 angepasst ist, kann der Schaft 6 entlang der Führungsnut 13 verschoben werden, jedoch ohne Möglichkeit der Drehung. Diese wird erst dann freigegeben, wenn der Schaft 6 ganz nach vorn herausgezogen ist, wo in dem Gehäuse 2 die Führungsnut 13 in eine Ringnut mündet. Unter "Ringnut" sind in diesem Zusammenhang auch anders geformte Ausnehmungen des Gehäuses 2 zu verstehen, die eine freie Drehung des Schaftes 6 ermöglichen.

Die Handkurbel 5 umfasst neben dem Schaft 6 einen mit dem Schaft 6 verbundenen (oder einstückig mit diesem hergestellten) Kurbelarm 7, an dessen Ende sich eine Öffnung zur Aufnahme eines Griffstückes 8 befindet. Das Griffstück 8 ist in der genannten Öffnung in der Richtung eines Feiles 9 parallel zu dem Schaft 6 verschiebbar und kann aus der eingeschobenen Ruhestellung gemäß der Figur 2 vom Benutzer in eine herausgezogene Arbeitsstellung überführt werden, die in den die Figuren 3 und 4 gezeigt ist.

In der Normal- oder Ruhestellung (vgl. Figuren 1 und 6) ist die Handkurbel 5 in einer als Aufnahmetasche 14 ausgebildeten Ausnehmung bündig versenkt unterzubringen. Die Aufnahmetasche 14 gehört zu einem Bedienpulteinsatz 15 (vgl. Figuren 1 und 2), der am unteren Rand des Bedienpultes 104 des Leistungsschalters 102 angeordnet ist. Beim Einschieben der Handkurbel 5 in ihre Ruhestellung gelangt eine Stirnfläche 12 (vgl. Figuren 3 bis 5) am Ende des Schaftes 6 zur Anlage an einem Stützring 34, der durch eine Anschlagfeder 33 (vgl. Figur 5) belastet ist. Die Anschlagfeder 33 ist eine Schraubendruckfeder, die auf der Antriebswelle 3 sitzt. Anschließend schiebt der Benutzer das Griffstück 8 durch die im Kurbelarm 7 befindliche Öffnung bis zur Bündigstellung mit dem Kurbelarm 7. Das innere Ende des Griffstückes 8 liegt dann an einem Anschlag 10 an.

In dieser eingeschobenen Ruhestellung hat der Benutzer an sich keine Möglichkeit, den Kurbelarm zu ergreifen, weil die Kontur der Aufnahmetasche 14 dem Kurbelarm 7 mit Schaft 6 und Griffstück 8 angepasst ist. Dennoch ist bei Bedarf ein rascher Zugriff gewährleistet. Dies geschieht dadurch, dass die Tiefe der Aufnahmetasche um ein gewisses Maß größer bemessen ist, als es die Unterbringung der genannten Teile erfordert. Der Benutzer kann deshalb den Kurbelarm 7 gegen die Kraft der Anschlagfeder 33 etwas in die Aufnahmetasche hineindrücken. An dieser Bewegung kann jedoch das Griffstück 8 wegen der Anlage an dem festen Anschlag 10 nicht teilnehmen und steht nun um den gleichen Betrag aus dem Kurbelarm 7 hervor. Der Benutzer kann nun das Griffstück 8 und anschließend den Kurbelarm 7 mit Schaft 6 herausziehen.

In ähnlicher Weise wie bei bekannten Fahrantrieben ist neben der Handkurbel 5 ein Anzeigefenster 16 angeordnet, in dem ein Anzeigemittel 17 für die betriebliche Position des Leistungsschalters in seinem Einschubrahmen sichtbar ist. Diese Positionen - Betriebstellung, Teststellung und Trennstellung - beziehen sich bekanntlich auf die relative Stellung von beweglichen Haupttrennkontakten und Hilfstrennkontakten und damit bei gegebener Anordnung dieser Trennkontakte auf die Position des Leistungsschalter 102 im zugehörigen Einschubrahmen 101. Aufgrund des Eingreifens der Fahrkurbeln 39 an den Enden der Fahrwelle 37 in eine ortsfeste Führung des Einschubrahmens 101 bildet somit die Winkelstellung des Getrieberades 4 ein zuverlässiges Merkmal für die genannten Stellungen.

Gemäß der Figuren 3 und 4 ist für die Zwecke der Anzeigevorrichtung an einer Stirnseite des Getrieberades 4 eine Steuerkurve 22 angeordnet, an der ein Taststift 21 eines zweiarmigen Anzeigehebels 18 unter der Wirkung einer Zugfeder 23 (Figur 4) anliegt. Der um eine Lagerschraube 20 schwenkbare Anzeigehebel 18 überträgt somit die Steuerkurve 22 in eine vom Benutzer im Anzeigefenster 16 (vgl. Figur 2) wahrnehmbare Stellung des Anzeigemittels 17. Hierbei ist es wesentlich, dass der Benutzer bei der Betätigung der Handkurbel 5 das Erreichen der genannten Stellungen gut erkennen kann. Zu diesem Zweck ist die Steuerkurve 22 mit Abschnitten unterschiedlicher Steigung versehen, die so gestaltet sind, dass das Anzeigemittel jeweils kurz nach dem Verlassen einer der genannten Stellungen eine Zwischenstellung einnimmt und dann erst kurz vor dem Erreichen der folgenden Stellung auf diese zeigt. Durch die relativ nahe bei der Steuerkurve 22 gelegene Lagerschraube 20 des Anzeigehebels 18 werden relativ kleine Auslenkungen in gut sichtbare Bewegungen des Anzeigemittels 17 im Anzeigefenster 16 übersetzt.

Durch einen Rastschieber 28, der durch eine Vorspannfeder 30 belastet ist (Figur 3), wird der Schaft 6 gegen ein unbeabsichtigtes Einschieben in das Gehäuse 2 geschützt. Der Rastschieber 28 ist im vorderen Teil des Gehäuses 2 geführt und wirkt gleichfalls mit der Stirnfläche 12 am inneren Ende des Schaftes 6 zusammen. Beim Herausziehen des Schaftes 6 in seine Arbeitsstellung springt der Rastschieber 28 mit einer seiner beiden der Antriebswelle 3 zugewandten Kanten hinter die Stirnfläche 12 und sperrt damit das Einschieben des Schaftes 6. Um den Schaft 6 zum Einschieben freizugeben, steht dem Benutzer eine Betätigungsnase 31 (vgl. Figur 2) zur Verfügung, die so angeordnet ist, dass sie in die Aufnahmetasche 14 hineinragt und daher nur bei herausgezogener Handkurbel 5 zugänglich ist.

Eine zusätzliche Funktion hat der Rastschieber 28 in der mittleren Position (Teststellung) des Fahrantriebes 1. Diese äußert sich für den Benutzer im Unterschied zu der Betriebsstellung und Trennstellung nicht durch einen fühlbaren Widerstand an der Handkurbel durch das Erreichen von Endanschlägen. Damit der Benutzer dennoch die Handkurbel 5 nur beim genauen Erreichen der Teststellung einschieben kann, ist der Rastschieber 28 mit einer Zunge 29 versehen, die seitlich am Gehäuse 2 heraustritt, wenn die Betätigungsnase 31 bedient wird und eine im Anzeigehebel 18 angeordnete Fensteröffnung der Zunge 29 gegenübersteht.

Die Fahrantriebe der bekannten Schalter besitzen bereits eine Einrichtung, die eine Betätigung verhindert, wenn der Leistungsschalter eingeschaltet ist (DE 44 20 580 C1). Hierzu wird der Zugang zu der Antriebswelle durch ein Schutzorgan versperrt. - Bei dem Fahrantrieb nach der Erfindung wird darüber hinaus dem Benutzer auch der Zugang zur Handkurbel 5 verwehrt, indem bei in der Ausnehmung 14 versenktem Kurbelarm 7 ein zum Sperren des Betätigens der Antriebwelle aktivierter erster Sperrmechanismus den Schaft 6 der Handkurbel 5 axial fixiert. Dies geschieht durch ein als Sperrhebel 24 (vgl. Figuren 2 und 6) ausgebildetes erstes Sperrelement in Verbindung mit einer im Schaft 6 der Handkurbel angeordneten in axialer Richtung des Schalters begrenzten Sperrnut 26 (Figur 2). Der Sperrhebel 24 steht dabei sinngemäß mit einem als Sperrstange 27 (Figur 2) ausgebildeten ersten Betätigungselement in Verbindung, wie dies in der DE 44 20 580 C1 beschrieben ist. Bestehen die Voraussetzungen dafür, dass der Fahrantrieb 1 gefahrlos betätigt werden kann, so wird der Sperrhebel 24 durch das Betätigungselement 27 entsprechend einem in der Figur 1 gezeigten Feil angehoben, wobei eine Sperrnase 25 des Sperrhebels 24 aus der Sperrnut 26 des Schaftes 6 herausgezogen wird. Umgekehrt ist die Einschaltung des Leistungsschalters 102 erst möglich, wenn die Handkurbel 5 wieder in ihre Ruhestellung in der Ausnehmung 14 eingeschoben ist und somit die Sperrnase 25 am Sperrhebel 24 wieder in die Sperrnut 26 eintreten kann.

Gemäß der Figur 5 weist der Fahrantrieb 1 des neuen Schalters einen zweiten Sperrmechanismus zum Sperren des Betätigens der Antriebswelle 3 auf. Dieser zweite Sperrmechanismus dient dazu, ein Verfahren des Schalters im Einschubrahmen mittels eines Zylinderschlosses 41 (Figur 5); 42 (Figur 6) und/oder bei geöffneter Tür 42 (vgl. Figur 1) der Schaltzelle 100 zu verhindern. Auch dieser zweite Sperrmechanismus fixiert den Schaft 6 der Handkurbel 5 in seiner axialen Richtung 19, wenn der Sperrmechanismus zum Sperren aktiviert ist und wenn der Kurbelarm 7 der Handkurbel in der Ausnehmung 14 versenkt ist. Dies geschieht durch ein als Sperrklinke 44 ausgebildetes zweites Sperrelement in Verbindung mit einer im Schaft 6 der Handkurbel angeordneten zweiten Sperrnut 45, die ebenfalls in axialer Richtung 19 des Schaftes 6 begrenzt ist. Die Sperrklinke 44 ist als Metall-Stanzteil ausgebildet und an Anschlagflächen am Fahrantrieb in Richtung des Feiles 47 senkrecht zum Schaft 6 verschiebbar geführt. Sie weist neben einer Sperrnase 48, die an der dem Schaft 6 zugewandten Seite angeformt ist, eine fensterartige Öffnung 49 auf, von dessen einer Innenwand eine parallel zur Verschiebungsrichtung 47 der Sperrklinke verlaufende erster Haltezapfen 50 für eine Vorspannfeder 51 angeformt ist. In die fensterartige Öffnung 59 der Sperrklinke 44 ragt ein erster Arm 53 eines in Verschiebungsrichtung 47 der Sperrklinke verschiebbar am Fahrantrieb gehaltenen zweiten Betätigungselementes 54. Zur Halterung dieses zweiten Betätigungselementes 54 an dem Fahrantrieb 1 dient ein zylindrischer Stift 55 der senkrecht zur Verschiebungsrichtung 47 verlaufende Innenwände des Betätigungselementes 54 und diesen Wänden gegenüberliegende Befestigungslaschen des Fahrantriebes im Bereich entsprechender Durchgangsbohrungen durchgreift. Zur axialen Fixierung des eingeschobenen Stiftes, weist der Stift einen verjüngten Abschnitt 46 auf, in den eine federnde Nase 56 des Befestigungselementes 54 einschnappt. Zur Demontage des Betätigungselementes 54 kann diese Nase 56 mittels eines Schraubendrehers oder eines vergleichbar schmalen Werkzeuges aus dem verjüngten Abschnitt 46 des Stiftes 55 herausgebogen und damit der Stift zum Herausziehen freigegeben werden.

An dem ersten Arm 53 des zweiten Betätigungselementes 54 ist ein zweiter Haltezapfen 57 für die Vorspannfeder 51 angeformt. Ein zweiter Arm 58 des Betätigungselementes 54 liegt unter der Kraft einer Rückstellfeder 59, die an einer ersten Stützfläche 61 einer der Gehäusehälften des Fahrantriebes abgestützt ist, an einer zweiten Stützfläche 62 dieser Gehäusehälfte an. Zur Führung der Rückhaltefeder 59 ist die eine Stützfläche 61 und das Betätigungselement 54 mit jeweils einem Haltezapfen 63, 64 versehen. Zur Steuerung des Betätigungselementes 54 dient ein erstes schematisch dargestelltes Zylinderschloss 41. Beim Schließen dieses ersten Zylinderschlosses 41 wirkt eine nicht dargestellte Nase in Richtung des Feiles 65 auf den zweiten Arm 58 und verschiebt das Betätigungselement 54 und die über die Vorspannfeder 51 an das Betätigungselement 54 gekoppelte Sperrklinke 44 entgegen der Kraft der Rückstellfeder 59 aus einer AUS-Stellung (vgl. Figur 5) in eine EIN-Stellung in Richtung des Schaftes 6 der Handkurbel. Bei vollständig eingeschobenem Schaft 6, d. h. bei in seiner Ausnehmung versenktem Kurbelarm 7, steht die zweite Sperrnut 45 des Schaftes 6 der Sperrnase 48 der Sperrklinke 44 gegenüber, so dass diese in die Sperrnut 45 eintauchen kann. Beim Versuch, den Kurbelarm 7 aus der Ausnehmung 14 herauszuziehen, gelangt die eine Seitenfläche der Sperrnut 45 in Anlage mit einer Anschlagfläche 66 der Sperrnase 48 und signalisiert damit dem Bedienpersonal, dass eine Sperrung des Fahrantriebes vorliegt. Hierbei genügt bereits ein leichter Widerstand, um die Sperrung des Fahrantriebes zu signalisieren. Das zweite Betätigungselement 54 ist im Unterschied zu dem ersten Betätigungselement 27 des ersten Sperrmechanismus auch dann aus seiner AUS-Stellung in seine EIN-Stellung verschiebbar, wenn der Kurbelarm 7 nicht oder noch nicht vollständig in der Ausnehmung 14 versenkt ist. Bei vollständig herausgezogenem Schaft 6 wird die Sperrklinke beim Anheben des Betätigungselementes 54 ebenfalls angehoben und ragt damit in die Bewegungsbahn des Schaftes 6. Beim Hereinschieben des Schaftes gleitet die Stirnfläche 12 des Schaftes 6 über eine Gleitfläche 67 der Sperrnase 48 der Sperrklinke und drückt die Sperrklinke 44 entgegen der Kraft der Vorspannfeder 51 aus der Bewegungsbahn des Schaftes heraus. Danach gleitet die Sperrnase 48 bis zu ihrem Einrasten in die Sperrnut 45 auf einem abgeflachtem Mantelabschnitt 68 des Schaftes entlang.

Zur alternativen Betätigung der Sperrklinke 44 ist das zweite Betätigungselement mit einem als zweiarmiger Hebel 70 ausgebildeten dritten Betätigungselement gekoppelt. Zur Ankopplung weist das zweite Betätigungselement 54 am freien Ende seines ersten Armes 53 eine U-förmige Ausnehmung 71 auf, in die ein erster Arm 72 des zweiarmigen Hebels 70 eingreift. Dieser zweiarmige Hebel ist um eine nicht dargestellte ortsfeste Lagerschraube, die eine Bohrung 74 des Hebels 70 durchgreift, drehbar. Der zweite Hebelarm 75 des Hebels 70 ist mittels einer Klinke 73 des Zylinderschlosses 42 (vgl. Figur 6) in Richtung des Feiles 77 betätigbar.

Gemäß der Figur 6 dient zur Steuerung der Bewegung des Betätigungselementes 54 und damit zur Steuerung des zweiten Sperrmechanismus eine Vorrichtung, die ein mit einer Schrägfläche 81 versehenes Schubelement 80 aufweist. Dieses Schubelement 80 ist als Metall-Stanz/Biegeteil ausgebildet und weist zusätzlich zu der Schrägfläche 81, die rechtwinklig zur Richtung des Fahrweges des Schalters geneigt ist, einen abgewinkelten Stützarm 79 zur Anlage an der Innenseite 84 der Tür 42 der Schaltzelle 100 (vgl. Figur 1) und eine fensterartige Öffnung 85 zur Aufnahme einer Rückstellfeder 86 und eine das Widerlager für das eine Ende der Rückstellfeder bildende Bohrung 87 auf. Das abgewinkelte Ende 83 des Stützarmes ist derart gekrümmt, dass es punktförmig und damit reibungsarm an der Innenseite der Tür anliegt. Die fensterartige Öffnung 85 erstreckt sich in Wirkrichtung 91 der Rückstellfeder und dabei etwa in einem Winkel α von 45° schräg zur Verfahrrichtung 82 des Schalters. - Der Winkel α zwischen der Verfahrrichtung des Schalters und der Wirkrichtung der Rückstellfeder sollte bevorzugt zwischen 30 und 60 Grad betragen.

Das Widerlager des anderen Endes der Rückstellfeder 86 ist von einer Bohrung 88 im Einschubrahmen des Schalters gebildet. In dem Einschubrahmen sind weiterhin drei eine Dreipunktauflage für das Schubelement bildende Führungsschlitze parallel zur Wirkrichtung 91 der Rückstellfeder 86 ausgebildet, von denen in der Figur 6 nur einer 89 sichtbar ist und die jeweils von einem am Schubelement angenieteten Führungsstift durchgriffen sind, wobei die freien Enden der Führungsstifte mit einem Bund versehen sind dessen Durchmesser breiter als die Breite der Führungsschlitze ausgebildet ist. Jeweils ein Ende der Führungsschlitze ist derart erweitert, dass die Stifte mit ihrem Bund leicht in die Schlitze einführbar sind. Das andere Ende der Schlitze bildet jeweils einen Anschlag 90 , an dem das Schubelement bei geöffneter Tür unter der Kraft der Rückstellfeder gehalten ist. In dieser Anschlagstellung des Schubelementes steht eine sich an das obere Ende der Schrägfläche anschließende Arbeitsfläche 93 einem abgerundeten freien Ende 92 des zweiten Betätigungselementes 54 gegenüber, wodurch das zweite Betätigungselement 54 in seiner EIN-Stellung und damit der zweite Sperrmechanismus in seiner Sperr-Stellung aktiviert ist. Beim Schließen der Tür gelangt die Innenseite 84 der Tür 42 in Anlage mit dem abgewinkelten Ende 83 des Stützarmes 79 des Schubelementes und verschiebt das Schubelement 80 entgegen der Kraft der Rückstellfeder 86 schräg zur Verfahrrichtung 82 des Schalters derart, dass die Schrägfläche 81 des Schubelementes seitlich an dem freien Ende des zweiten Betätigungselementes so weit abgleitet, bis das untere Ende der Schrägfläche dem freien Ende gegenübersteht (vgl. Figur 6). Hierdurch ist das zweite Betätigungselement freigegeben und nimmt unter der Kraft der Rückstellfeder 59 seine AUS-Stellung ein, wodurch der zweite Sperrmechanismus in seine Freigabe-Stellung überführt ist.

Alternativ zu dieser Ausführungsform der Vorrichtung kann die Schrägfläche auch am Einschubrahmen des Schalters ausgebildet sein, wobei dann das Schubelement auf der Schrägfläche gleitend auf das zweite Betätigungselement wirkt.

## Patentansprüche

1. Elektrischer Schalter mit einer Antriebswelle (3), die mittels einer Handkurbel (5) betätigbar ist, und mit einem Sperrmechanismus zum Sperren des Betätigens der Antriebswelle, bei dem die Handkurbel (5) einen entlang der Antriebswelle (3) verschiebbaren, gegen Abnahme von der Antriebswelle gesicherten Schaft (6) und einen am Schaft axial fixierten, vom Schaft abgewinkelten Kurbelarm (7) aufweist
**dadurch gekennzeichnet,**
**dass** an der Frontseite (104) des Schalters eine Ausnehmung (14) vorgesehen ist, in die der Kurbelarm (7) durch Verschieben des Schaftes (6) verdrehsicher versenkbar ist,
wobei bei in der Ausnehmung (14)versenktem Kurbelarm (7) der zum Sperren aktivierte Sperrmechanismus den Schaft (6) axial fixiert.

2. Elektrischer Schalter nach Anspruch 1,
**dadurch gekennzeichnet,**
**dass** der Sperrmechanismus bei aus der Ausnehmung (14) herausgezogenem Kurbelarm (7) zum Sperren der Antriebswelle (3) aktivierbar ist.

3. Elektrischer Schalter nach Anspruch 2,
**dadurch gekennzeichnet,**
**dass** der Sperrmechanismus eine im Schaft (6) der Handkurbel (5) angeordnete, axial begrenzte Nut (45), ein zum Eingriff in die Nut (45) dienendes Sperrelement (44) und ein auf das Sperrelement (44) wirkendes Betätigungselement (54) aufweist und
**dass** der Sperrmechanismus bei in eine EIN-Stellung überführtem Betätigungselement (54) aktiviert ist,
wobei das Sperrelement (44) über einen Federmechanismus (51) mit dem Betätigungselement (54) gekoppelt ist und bis zum Eingriff in die Nut (45) bei axialer Bewegung des Schaftes (6) auf dem Schaft gleitet.

4. Elektrischer Schalter nach Anspruch 3,
**dadurch gekennzeichnet,**
**dass** das Sperrelement (44) eine Gleitfläche (67) aufweist, mittels deren das Sperrelement (44) beim Verschieben des Kurbelarmes (7) in Richtung der Ausnehmung (14) aus der Bewegungsbahn des Schaftes (6) herausgedrückt wird.

5. Elektrischer Schalter nach einem der Ansprüche 3 oder 4,
**dadurch gekennzeichnet,**
**dass** zur alternativen Betätigung des Sperrelementes (44) das eine Betätigungselement (54) mit einem zusätzlichen Betätigungselement (70) gekoppelt ist.

## Claims

1. Electric switch with a drive shaft (3), which can be actuated by means of a crank handle (5), and with a blocking mechanism for blocking the actuation of the drive shaft, in which the crank handle (5) has a shaft (6) which is displaceable along the drive shaft (3), is secured in a manner that prevents it from being removed from the drive shaft and has a crank arm (7) fixed axially on the shaft and angled away from the shaft, **characterized in that** provided on the front side (104) of the switch is a recess (14) into which the crank arm (7) can be lowered in an anti-rotational manner by displacing the shaft (6), wherein the blocking mechanism that has been activated for blocking fixes the shaft (6) axially once the crank arm (7) has been lowered in the recess (14).

2. Electric switch according to Claim 1, **characterized in that** the blocking mechanism can be activated for blocking the drive shaft (3) when the crank arm (7) has been pulled out of the recess (14).

3. Electric switch according to Claim 2, **characterized in that** the blocking mechanism has a slot (45) which is arranged in the shaft (6) of the crank handle (5) and is limited axially, a blocking element (44) which serves for engagement in the slot (45) and an actuating element (54) which acts on the blocking element (44), and **in that** the blocking mechanism is activated when the actuating element (54) has been transferred into an ON position, the blocking element (44) being coupled to the actuating element (54) by means of a spring mechanism (51) and sliding on the shaft (6) until engagement in the slot (45) when there is axial movement of the shaft (6).

4. Electric switch according to Claim 3, **characterized in that** the blocking element (44) has a sliding surface (67), by means of which the blocking element (44) is pressed out of the path of movement of the shaft (6) when the crank arm (7) is displaced in the direction of the recess (14).

5. Electric switch according to one of Claims 3 or 4, **characterized in that**, for the alternative actuation of the blocking element (44), the one actuating element (54) is coupled to an additional actuating element (70).

## Revendications

1. Commutateur électrique comprenant un arbre (3) d'entraînement, qui peut être actionné au moyen d'une manivelle ( 5 ), et un mécanisme de blocage pour bloquer l'actionnement de l'arbre d'entraînement, dans lequel la manivelle (5) a une tige ( 6 ), qui peut coulisser le long de l'arbre ( 3 ) d'entraînement et qui ne peut pas être retirée de l'arbre ( 3 ) d'entraînement, et un bras ( 7) de manivelle immobilisé axialement sur la tige et coudé par rapport à la tige,
**caractérisé**
**en ce que**, du côté ( 104 ) avant du commutateur, est prévu un évidement ( 14 ), dans lequel le bras ( 7 ) de manivelle peut être enfoncé sans pouvoir tourner par le coulissement de la tige ( 6 ),
dans lequel, dans le bras ( 7 ) de manivelle enfoncé dans l'évidement ( 14 ), le mécanisme de blocage activé pour le blocage immobilise axialement la tige ( 6 ).

2. Commutateur électrique suivant la revendication 1,
**caractérisé**
**en ce que** le mécanisme de blocage peut, lorsque le bras ( 7 ) de manivelle est retiré de l'évidement ( 14 ), être activé pour bloquer l'arbre ( 3 ) d'entraînement.

3. Commutateur électrique suivant la revendication 2,
**caractérisé**
**en ce que** le mécanisme de blocage a une rainure ( 45 ) ménagée dans la tige (6) de la manivelle (5) et délimitée axialement, un élément ( 44 ) de blocage destiné à pénétrer dans la rainure (45) et un élément ( 54 ) d'actionnement agissant sur l'élément ( 44 ) de blocage et en ce que le mécanisme de blocage est activé, lorsque l'élément (54) d'actionnement passe dans une position marche,
dans lequel l'élément ( 44 ) de blocage est couplé par un mécanisme (51) à ressort à l'élément ( 54 ) d'actionnement et, lors d'un mouvement axial de la tige ( 6 ), glisse sur la tige jusqu'à pénétration dans la rainure ( 45 ).

4. Commutateur électrique suivant la revendication 3,
**caractérisé**
**en ce que** l'élément ( 44 ) de blocage a une surface ( 67 ) de glissement, au moyen de laquelle l'élément (44) de blocage est, lors du déplacement de l'arbre (7) de manivelle en direction de l'évidement ( 14 ), repoussé hors de la voie de déplacement de la tige ( 6 ).

5. Commutateur électrique suivant l'une des revendications 3 ou 4,
**caractérisé**
**en ce que**, pour l'actionnement en alternance de l'élément ( 44 ) de blocage, le un élément ( 54 ) d'actionnement est couplé à un élément ( 70 ) d'actionnement supplémentaire.
